# EUROPEAN PATENT SPECIFICATION

(11) **EP 2 864 011 B1**
(45) Date of publication and mention of the grant of the patent: **08.08.2018**
(21) Application number: 13810718.0
(22) Date of filing: 12.06.2013
(51) Int. Cl.: B01D 11/00, C22B 3/00, B03B 5/60, B01D 21/00, E02D 27/32, B65D 88/12, B01D 11/04, C22B 3/02, C22B 3/22, E02D 27/12

(54) **SOLVENT EXTRACTION SETTLER COMPRISING A FOUNDATION**
LÖSUNGSMITTELEXTRAKTIONSABSETZBECKEN MIT EINEM FUNDAMENT
DÉCANTEUR POUR EXTRACTION PAR SOLVANT COMPRENANT UNE FONDATION

(30) Priority: 26.06.2012 FI 20125714
(43) Date of publication of application: 29.04.2015
(73) Proprietor: Outotec (Finland) Oy, 02230 Espoo (FI)
(72) Inventor: VAARNO, Jussi, FI-02450 Sundsberg (FI); SAARIO, Rami, FI-02230 Espoo (FI); FREDRIKSSON, Henri, FI-00320 Helsinki (FI)
(74) Representative: Papula Oy
(86) International application number: PCT/FI2013/050637
(87) International publication number: WO 2014/001619

(56) References cited:
- EP-A1- 0 156 699
- WO-A1-2012/026345
- WO-A2-2009/004321
- WO-A2-2010/131982
- CN-Y- 2 480 439
- US-A1- 2011 236 152

## Description

### FIELD OF THE INVENTION

The present invention relates to a solvent extraction plant comprising a foundation.

### BACKGROUND OF THE INVENTION

As taught in the article "Solvent Extraction Mixer-Settler Design", by M.L. Jansen and A. Taylor, ALTA Metallurgical Services Publication. Jansen, M. L., Taylor, A, 1997, a typical arrangement of a mixer-settler consists of an agitated tank (mixer or mix box) in which the aqueous and organic solutions are contacted, followed by a shallow gravity settling basin (settler) where the solutions disengage into individual layers for separate discharge. The settler may be cylindrical or rectangular, though a rectangular shape is most commonly used in order to provide a more compact layout, and to minimize interstage piping runs.

The settler tank is normally built on the site. WO 2007/135221 A1 discloses one method for manufacturing a mixer-settler on site. The wall structures are connected by vertical support columns to the bottom plate. The wall structure is formed by fastening a required number of horizontal support beams to the vertical support columns at regular intervals. A required number of plate-like wall elements made of a chemically resistant material are attached to the horizontal support beams inside the mixer-settler, so that they form a load-bearing structure in the spaces left between the horizontal support beams. The plate-like wall elements are connected to the plate-like element covering the bottom plate of the mixer-settler. Such a settler is still a large tank which is square in plan and its square area is about several hundred square meters.

In the above-mentioned article "Solvent Extraction Mixer-Settler Design", by M.L. Jansen and A. Taylor, ALTA Metallurgical Services Publication. Jansen, M. L., Taylor, A, 1997, there is further disclosed three alternative concepts of foundation or support for the settler. In the first one, the settlers are at the ground level. The other two concepts involve the elevation of the settlers on fill or concrete, steel or wooden supports, and are more applicable to flat sites. One example of this is the settler tank module of WO 2009/004321. The problem in all these concepts is that they do not allow unobstructed access below the settler. Further, a lot of excavation and construction work must be made at the site which causes problems because of the crucial influence of local factors. It may be difficult to get local suppliers. The quality of the site work may vary. The solvent extraction plant is project specified. In each case the layout of the plant and the equipment are unique. Further, there is not a possibility for productization of the settlers.

### OBJECT OF THE INVENTION

The object of the invention is to eliminate the disadvantages mentioned above.

### SUMMARY OF THE INVENTION

The invention provides a solvent extraction settler comprising a foundation. The solvent extraction settler comprises self-supporting modules each having exterior dimensions, strength and corner fittings conforming to shipping container standards. The foundation comprises a plurality of pillars on which the modules are supported at a height above the ground level, thereby providing a space for piping and access below the plant, and the pillars comprise shipping standard compatible container lashing fittings to which the corner fittings of the modules can be connected.

The advantage of the fact that the settler modules and also the pillars (with or without cast concrete) can be manufactured in the factory environment, which is different from the installation site environment, is that it provides good quality. The settler modules being ISO shipping container standard compatible units provides all benefits of the normal shipping containers: they can be handled with normal transport equipment and there is no need for oversize transport equipment. The settler element modules having the dimensions, strength and handling and securing means conforming to shipping container standards thus have all the benefits of the transportability of normal shipping containers. The settler modules can be transported on land by trucks and trailers and on container ships by sea. In ports they can be handled with normal container handling equipment. A complete solvent extraction plant, which may comprise one or more settlers, can be shipped in one delivery. The modules have the strength and durability to withstand stacking of a number of modules on top of one another. Concrete pillars which are arranged to support each corner of the modules allow flexible level positioning of the settler and enable construction of the entire solvent extraction plant on the planar ground. Pillars also enable access below the settler, and piping for the water circulation can also be arranged below the settler. A minimal amount of excavation work is required at the installation site, speeding up the installation. The project lead time is short. Mounting of the modules on pillars allows easy assembly and disassembly of the modules and settler. The modular system allows flexible capacity since more capacity can be built while the plant is running simply by adding more pillars and modules onto said pillars.

In one embodiment of the settler, the pillar comprises a lower end which is supported on the ground, an upper end, and one or more container lashing fittings attached to the upper end of the pillar.

In one embodiment of the settler, the container lashing fitting comprises a stacking cone.

In one embodiment of the settler, the container lashing fitting comprises a twist lock.

In one embodiment of the settler, the pillar comprises one to four container lashing fittings, depending on the number of corner fittings to be connected onto the pillar.

In one embodiment of the settler, the pillar comprises a plastic tube, a concrete reinforcement arranged inside the plastic tube, cast concrete cast inside the plastic tube, and a metal base plate attached to the upper end of the pillar, to which base plate one or more container lashing fittings are fixedly connected.

In one embodiment of the settler, the modules and their corner fittings conform to ISO shipping container standards. The container lashing fittings on the pillars are ISO shipping standard compatible.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is an axonometric view of a solvent extraction settler according to a first embodiment of the present invention,
Figure 2 is a view of the layout of the foundation of the settler of Figure 1,
Figures 3 to 6 show an axonometric view of four different types of pillars used in the foundation of Figure 2, the pillars being equipped with stacking cones as container lashing fittings,
Figures 7 and 8 show another embodiment of the pillar equipped with a twist lock as a container lashing fitting, and
Figure 9 shows a schematic longitudinal section of the pillar.

### DETAILED DESCRIPTION OF THE INVENTION

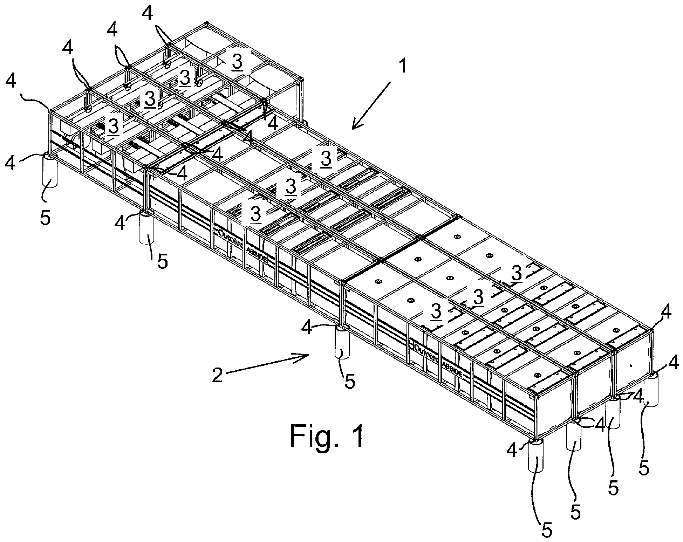

Figure 1 shows one embodiment of a solvent extraction settler 1 which is used in hydrometallurgical liquid-liquid extraction processes for separating solutions mixed in a dispersion into different solution phases. The dispersion pump and mixers which are used to prepare the dispersion are not shown in the Figures. The settler 1 comprises a plurality of self-supporting modules 3. Each of the modules 3 has the exterior dimensions, strength and handling and securing means, i.e. corner fittings 4, which conform to ISO shipping container standards to enable ISO compatible transportability. In particular, each module 3 comprises a self-supporting framework structure having a shape of a rectangular parallelepiped with exterior dimensions and corner fittings 4 conforming to ISO shipping container standards. The corner fittings 4 are attached to each eight corners of the framework structure. Each module 3 conforms to the standard ISO 668 Series 1 "Freight containers - Classification, dimensions and ratings". The corner fittings 4 conform to the standard ISO 1161 Series 1 "Freight containers - Corner fittings - specification".

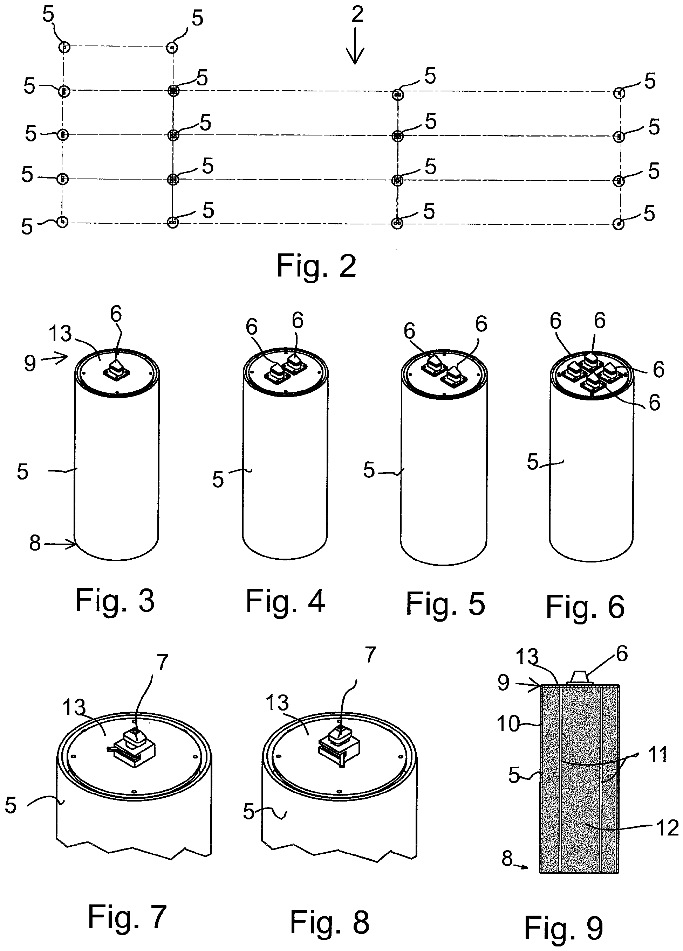

Figure 2 shows a layout of the foundation 2 designed for the module group of the settler shown in Figure 1. The settler 1 comprises a foundation 2 on which the modules 3 are supported at a height above the ground level, thereby providing a space for piping and access underneath the settler 1. The foundation 2 comprises a plurality of pillars 5 having ISO shipping standard compatible container lashing fittings 6, 7 to which the corner fittings 4 of the modules 3 can be connected.

Figures 3 and 9 show that the pillar 5 comprises a lower end 8 which is supported on the ground, and an upper end 9. One or more container lashing fittings 6, 7 are attached to the upper end 9. As illustrated in Figures 3 to 6, the pillar 5 may comprise one to four container lashing fittings 6, 7, depending on the number of corner fittings 4 to be connected onto the pillar 5. A pillar 5 supporting one corner of the module comprises only one container lashing fitting 6 (Fig. 3). A pillar 5 supporting two corners of parallel modules comprises a pair of container lashing fittings 6 arranged side-by-side (Fig. 4). A pillar 5 supporting two corners of sequential modules comprises a pair of container lashing fittings 6 arranged in a row (Fig. 5). A pillar 5 supporting four corners of parallel and sequential modules comprises two pairs of container lashing fittings 6 (Fig. 6). The container lashing fittings may be stacking cones 6 as shown in Figures 3 to 6 or alternatively they may be twist locks 7 as shown in Figures 7 and 8.

With reference to Figure 9, the pillar 5 comprises a plastic tube 10, a concrete reinforcement 11 of metal arranged inside the plastic tube 10, cast concrete 12 cast inside the plastic tube 10, and a metal base plate 13 attached at the upper end 9 of the pillar, to which base plate 13 one or more container lashing fittings 6, 7 are fixedly connected.

The solvent extraction settler 1 is manufactured so that at the site of manufacture, such as in an engineering workshop, a plurality of self-supporting modules 3 is manufactured. Each module 3 has the exterior dimensions, strength and handling and securing means 4 conforming to ISO shipping container standards. The modules 3 are transported to the site of installation as normal freight by transport equipment, such as trucks, trailers and container ships, capable of handling and transporting ISO compatible units. At the site of installation, pillars 5 are supported on the ground in a configuration according to the layout of the intended settler. Finally, at the site of installation, the modules 3 are assembled into a complete settler 1 built of pillars 5, and the corner fittings 4 of the modules 3 are engaged to the container lashing fittings 6, 7 of the pillars 5.

It is obvious to a person skilled in the art that with the advancement of technology, the basic idea of the invention may be implemented in various ways. The invention and its embodiments are thus not limited to the examples described above; instead, they may vary within the scope of the claims.

## Claims

1. A solvent extraction settler (1) which is used in hydrometallurgical liquid-liquid extraction processes for separating solutions mixed in a dispersion into different solution phases, said settler (1) comprising a foundation (2), **characterized in that** the solvent extraction settler (1) comprises a plurality of self-supporting modules (3), each self-supporting module (3) comprising a self-supporting framework structure having a shape of a rectangular parallelepiped with exterior dimensions and corner fittings (4) conforming to ISO shipping container standards; and that the foundation (2) comprises a plurality of pillars (5) on which the self-supporting modules (3) are supported at a height above the ground level, thereby providing a space for piping and access below the settler, and that the pillars (5) comprise shipping standard compatible container lashing fittings (6, 7) to which the corner fittings (4) of the modules (3) can be connected.

2. The settler according to claim 1, **characterized in that** the pillar (5) comprises a lower end (8) which is supported on the ground, an upper end (9), and one or more container lashing fittings (6, 7) attached to the upper end (9) of the pillar (5).

3. The settler according to claim 1 or 2, **characterized in that** the container lashing fitting comprises a stacking cone (6).

4. The settler according to any one of the claims 1 to 3, **characterized in that** the container lashing fitting comprises a twist lock (7).

5. The settler according to any one of the claims 1 to 4, **characterized in that** the pillar (5) comprises one to four container lashing fittings (6, 7), depending on the number of corner fittings (4) to be connected onto the pillar.

6. The settler according to any one of the claims 1 to 5, **characterized in that** the pillar (5) comprises a plastic tube (10), a concrete reinforcement (11) arranged inside the plastic tube (10), cast concrete (12) cast inside the plastic tube, and a metal base plate (13) attached at the upper end of the pillar, to which base plate one or more container lashing fittings (6, 7) are fixedly connected.

7. The settler according to any one of the claims 1 to 6, **characterized in that** the modules (3) and their corner fittings (4) conform to ISO shipping container standards; and that the container lashing fittings (6, 7) are ISO shipping standard compatible.

## Patentansprüche

1. Solventextraktionsabscheider (1), der in hydrometallurgischen Flüssig-Flüssig-Extraktionsprozessen zur Trennung von in einer Dispersion vermischten Lösungen in verschiedene Lösungsphasen verwendet wird, wobei der Abscheider (1) einen Unterbau (2) umfasst, **dadurch gekennzeichnet, dass** der Solventextraktionsabscheider (1) eine Vielzahl von selbsttragenden Modulen (3) umfasst, wobei jedes selbsttragende Modul (3) ein selbsttragendes Rahmentragwerk in Form eines rechteckigen Quaders mit Außenmaßen und Eckbeschlägen (4) entsprechend ISO Normen für Transportcontainer umfasst; und dass der Unterbau (2) eine Vielzahl von Säulen (5) umfasst, auf denen die selbsttragenden Module (3) in einer Höhe über dem Bodenniveau gehalten werden, wodurch Raum für ein Rohrleitungssystem und Zugang unter dem Abscheider bereitgestellt ist, und dass die Säulen (5) Beschläge (6, 7) zum Verzurren von normgerechten Transportcontainern umfassen, mit denen die Eckbeschläge (4) der Module (3) verbunden werden können.

2. Abscheider nach Anspruch 1, **dadurch gekennzeichnet, dass** die Säule (5) ein unteres Ende (8), das am Boden abgestützt wird, ein oberes Ende (9) und einen oder mehrere Beschläge (6, 7) zum Verzurren von Containern, die an dem oberen Ende (9) der Säule (5) befestigt sind, umfasst.

3. Abscheider nach Anspruch 1 oder 2, **dadurch gekennzeichnet, dass** der Beschlag zum Verzurren von Containern ein Staustück (6) umfasst.

4. Abscheider nach einem der Ansprüche 1 bis 3, **dadurch gekennzeichnet, dass** der Beschlag zum Verzurren von Containern einen Riegelbolzen (7) umfasst.

5. Abscheider nach einem der Ansprüche 1 bis 4, **dadurch gekennzeichnet, dass** die Säule (5) ein bis vier Beschläge (6, 7) zum Verzurren von Containern, abhängig von der Anzahl von Eckbeschlägen (4), die an der Säule zu verbinden sind, umfasst.

6. Abscheider nach einem der Ansprüche 1 bis 5, **dadurch gekennzeichnet, dass** die Säule (5) ein Kunststoffrohr (10), eine innerhalb des Kunststoffrohrs (10) angeordnete Betonbewehrung (11), Gussbeton (12), der in das Kunststoffrohr eingegossen wird, und eine Metallgrundplatte (13), die an dem oberen Ende der Säule befestigt ist, umfasst, wobei mit der Grundplatte ein oder mehrere Beschläge (6, 7) zum Verzurren von Containern fest verbunden sind.

7. Abscheider nach einem der Ansprüche 1 bis 6, **dadurch gekennzeichnet, dass** die Module (3) und ihre Eckbeschläge (4) ISO Normen für Transportcontainer entsprechen; und dass die Beschläge (6, 7) zum Verzurren von Containern mit der ISO Verladenorm kompatibel sind.

## Revendications

1. Décanteur d'extraction par solvant (1) qui est utilisé dans des processus d'extraction liquide-liquide hydrométallurgiques pour séparer des solutions mélangées dans une dispersion dans différentes phases de solution, ledit décanteur (1) comprenant une fondation (2), **caractérisé en ce que** le décanteur d'extraction par solvant (1) comprend une pluralité de modules autoportants (3), chaque module autoportant (3) comprenant une structure de bâti autoportante ayant une forme de parallélépipède rectangulaire avec des dimensions externes et des garnitures d'équerre (4) répondant aux standards de conteneurs d'expédition ISO ; et la fondation (2) comprend une pluralité de piliers (5) sur lesquels les modules autoportants (3) sont supportés à une certaine hauteur au-dessus du niveau du sol, fournissant ainsi un espace pour les canalisations et un accès en dessous du décanteur et les piliers (5) comprennent des garnitures d'amarrage de conteneurs (6, 7) compatibles avec les standards d'expédition auxquels les garnitures d'équerre (4) des modules (3) peuvent être raccordées.

2. Décanteur selon la revendication 1, **caractérisé en ce que** le pilier (5) comprend une extrémité inférieure (8) qui est supportée sur le sol, une extrémité supérieure (9) et une ou plusieurs garnitures d'amarrage de conteneurs (6, 7) fixées à l'extrémité supérieure (9) du pilier (5).

3. Décanteur selon la revendication 1 ou 2, **caractérisé en ce que** la garniture d'amarrage de conteneur comprend un cône d'empilage (6).

4. Décanteur selon l'une quelconque des revendications 1 à 3, **caractérisé en ce que** la garniture d'amarrage de conteneur comprend un verrou tournant (7).

5. Décanteur selon l'une quelconque des revendications 1 à 4, **caractérisé en ce que** le pilier (5) comprend une à quatre garnitures d'amarrage de conteneur (6, 7) en fonction du nombre de garnitures d'équerre (4) à raccorder sur le pilier.

6. Décanteur selon l'une quelconque des revendications 1 à 5, **caractérisé en ce que** le pilier (5) comprend un tube en matière plastique (10), un renfort de béton (11) agencé à l'intérieur du tube de matière plastique (10), du béton coulé (12) coulé à l'intérieur du tube de matière plastique et une plaque de base métallique (13) fixée à l'extrémité supérieure du pilier à laquelle plaque de base une ou plusieurs garnitures d'amarrage de conteneur (6, 7) sont raccordées de manière fixe.

7. Décanteur selon l'une quelconque des revendications 1 à 6, **caractérisé en ce que** les modules (3) et leurs garnitures d'équerre (4) répondent aux standards de conteneurs d'expédition ISO ; et les garnitures d'amarrage de conteneurs (6, 7) sont compatibles avec les standards d'expédition ISO.
